# EUROPEAN PATENT SPECIFICATION

(11) **EP 1 760 580 B1**
(45) Date of publication and mention of the grant of the patent: **04.11.2009**
(21) Application number: 06300923.7
(22) Date of filing: 05.09.2006
(51) Int. Cl.: G06F 9/38, G06F 9/30, G06F 9/46

(54) **Processing operation information transfer control system and method**
System und Verfahren zur Steuerung der Übertragung von Verarbeitungsvorgangsinformationen
Système et procédé de contrôle de transfert d'informations d'opérations de traitement

(30) Priority: 06.09.2005 US 221073
(43) Date of publication of application: 07.03.2007
(73) Proprietor: Alcatel Lucent, 75008 Paris (FR)
(72) Inventor: Gordon, Hanes, Ottawa Ontario K2P OW6 (CA); McBride, Brian, Stittsville Ontario K2S 1E4 (CA); Serghi, Laura Mihaela, Ottawa Ontario K1V 9Y8 (CA); Wilson, David James, Carp Ontario K0A 1L0 (CA)
(74) Representative: Nicolle, Olivier

(56) References cited:
- EP-A2- 0 955 583
- WO-A1-00/33186
- US-B1- 6 233 599
- MOWRY T C ET AL: "Software-controlled multithreading using informing memory operations" HIGH-PERFORMANCE COMPUTER ARCHITECTURE, 2000. HPCA-6. PROCEEDINGS. SIXTH INTERNATIONAL SYMPOSIUM ON TOULUSE, FRANCE 8-12 JAN. 2000, LOS ALAMITOS, CA, USA,IEEE COMPUT. SOC, US, 8 January 2000 (2000-01-08), pages 121-132, XP010371915 ISBN: 0-7695-0550-3
- OMONDI A R ET AL: "Performance of a context cache for a multithreaded pipeline" JOURNAL OF SYSTEMS ARCHITECTURE, ELSEVIER SCIENCE PUBLISHERS BV., AMSTERDAM, NL, vol. 45, no. 4, 1 December 1998 (1998-12-01), pages 305-322, XP004142885 ISSN: 1383-7621

## Description

### Field of the Invention

This invention relates generally to managing execution of software processing operations and, in particular, to controlling transfer of information associated with software processing operations such as threads.

### Background

Processing tasks or operations executed by processors can "block" or halt execution while waiting for the result of a particular instruction, a read from memory for instance. Such wait times impact processor efficiency in that a processor is not being utilized while it awaits completion of an instruction. Mechanisms which improve the efficiency of a processor can greatly improve processor performance.

Threads, which are sequential instructions of software code, provide a means of improving processing system efficiency and performance. An active thread is one in which instructions are being processed in the current clock cycle. When a thread becomes inactive, another thread may be exchanged for the current thread, and begin using the processing resources, improving processing efficiency of the system. One active thread may be executed while another one is in a non-active state, waiting for the result of an instruction, for example.

When execution of a thread by a processor is unable to continue, or is pre-empted, which may be when the active thread blocks or when the entire active thread has been executed, a different thread is passed to the processor for execution. According to conventional thread management techniques, this is accomplished by swapping respective execution context information associated with the active thread and the incoming thread between active thread registers of the processor and standby thread registers or other memory.

Dedicated memory blocks, typically in the form of a set of registers, are assigned to each thread and there is no option of economizing the memory. Each thread is assigned a certain storage space, and a corresponding amount of information must be transferred to swap threads, regardless of whether a thread actually uses all of the dedicated memory space. This may result in inefficient use of memory space, since every thread might not use all of its dedicated registers, and may also increase the amount of time required for thread swapping in that some registers might not be used by a thread but would still be swapped during thread swapping.

Several techniques for reducing the amount of information that is transferred during context or thread switching have been proposed. Examples of such techniques include those disclosed in: EP 0 955 583 A2; WO 00/33186 A1; Mowry et al, "Software-Controlled Multithreading Using Informing Memory Operations", Proceedings of the Sixth International Symposium on High-Performance Computer Architecture, 8 to 12 January 2000, pp. 121-132; and Omondi et al, "Performance Of A Context Cache For A Multithreaded Pipeline", Journal of Systems Architecture, Volume 45, No. 4, 1 December 1998, pp. 305-322. Although these techniques may reduce the amount of information transferred in order to switch contexts or threads, they do not reduce the amount of memory space dedicated to thread or context storage.

Thus, there remains a need for improved techniques for controlling transfer of information associated with software operations, such as thread execution context information.

### Summary of the Invention

Some embodiments of the invention provide a mechanism to specify which registers are to be copied for swapping a thread, in an effort to reduce thread swap time and memory requirements.

According to an aspect of the invention, a controller is configured to determine from among a plurality of first storage locations for storing respective blocks of information associated with a processing operation that is scheduled for execution by a processor and a plurality of second storage locations (124) fewer in number than the first storage locations (142) for storing information associated with an unscheduled processing operation, corresponding first and second storage locations between which information is to be transferred, and to cause information associated with a processing operation to be transferred between the determined corresponding first and second storage locations.

The controller may determine the corresponding first and second storage locations by receiving compression map information specifying a correspondence between the first and second storage locations.

In one embodiment, when the unscheduled processing operation is to be scheduled for execution by the processor, the controller causes the information associated with the unscheduled processing operation to be transferred from the plurality of second storage locations to the corresponding first storage locations. In another embodiment, after the scheduled processing operation has been executed by the processor, the controller causes the information associated with the scheduled processing operation to be transferred to the plurality of second storage locations from the corresponding first storage locations.

The processor may provide an indication of each first storage location of the plurality of first storage locations which is accessed during execution of the scheduled processing operation. In this case, the controller may be further configured to receive the indication provided by the processor, and to cause the information associated with the scheduled processing operation to be transferred only from each first storage location which is accessed during execution of the scheduled processing operation to its corresponding second storage location.

The controller may or may not cause contents of a first storage location of the plurality of first storage locations that has no corresponding second storage location to be modified. Where the plurality of first storage locations store information associated with another processing operation and the controller allows contents of a first storage location of the plurality of first storage locations that has no corresponding second storage location to remain intact, these contents are shared between processing operations.

In one embodiment, the plurality of first storage locations comprises standby thread registers, and the plurality of second storage locations comprises a thread store.

The controller may be provided in a system which also includes a first memory operatively coupled to the controller and comprising the plurality of first storage locations and, a second memory operatively coupled to the controller and comprising the plurality of second storage locations. Such a system may also include a processor operatively coupled to the controller and to the first memory. The controller itself, or at least some of its functions may be implemented using the processor.

According to another aspect, the present invention provides a method which includes determining, from among a plurality of first storage locations for storing respective blocks of information associated with a processing operation that is scheduled for execution by a processor and a plurality of second storage locations fewer in number than the first storage locations for storing information associated with an unscheduled processing operation, corresponding first and second storage locations between which information is to be transferred, and transferring information associated with a processing operation between the determined corresponding first and second storage locations.

These operations may be performed in any of various ways, and the method may also include further operations, some of which have been briefly described above.

A device according to another aspect of the invention includes a processing element for executing processing operations and a memory operatively coupled to the processing element. The memory comprises a plurality of storage locations for storing information associated with a processing operation to be executed by the processing element, and the processing element is configured to determine whether information is to be transferred from any storage locations, of the plurality of storage locations, after completion of its execution of the processing operation, and to cause information associated with the processing operation to be transferred from each determined storage location, if any, after completion of its execution of the processing operation.

The processing element may cause information associated with the processing operation to be transferred from each determined storage location by performing at least one of: providing an indication of each determined storage location, and transferring the information from each determined storage location.

In one embodiment, each determined storage location comprises a storage location accessed by the processing element during execution of the processing operation.

Where a number of storage locations of the plurality of storage locations store information for access by the processing element during its execution of the processing operation, the number of determined storage locations may be a greater, same, or smaller number of storage locations.

A machine-readable medium storing a data structure is also provided. The data structure includes a data field storing an indication of whether information is to be transferred to or from a storage location, of a plurality of storage locations for storing information associated with a processing operation for use by a processor in executing the processing operation.

The data structure may include a plurality of data fields storing indications of whether information is to be transferred from respective storage locations of the plurality of storage locations.

Other aspects and features of the present invention will become apparent to those ordinarily skilled in the art upon review of the following description of specific illustrative embodiments thereof.

### Brief Description of the Drawings

Examples of embodiments of the invention will now be described in greater detail with reference to the accompanying drawings, in which:
Fig. 1 is a block diagram of a processing system incorporating hardware threading;
Fig. 2 is a block diagram of a processing system incorporating another type of threading;
Fig. 3 is a block diagram of a processing system incorporating an embodiment of the invention;
Fig. 4 is a flow diagram illustrating a method according to an embodiment of the invention; and
Fig. 5 is a block diagram of a data structure according to an embodiment of the invention.

### Detailed Description of Preferred Embodiments

Threads are used to improve utilization of a processing unit or element such as an Arithmetic Logic Unit (ALU) by increasing a ratio of executing cycles to wait cycles. In upcoming advanced processing architectures, high level programming languages, on clustered processors for instance, will likely use advanced hardware features including threading to improve performance.

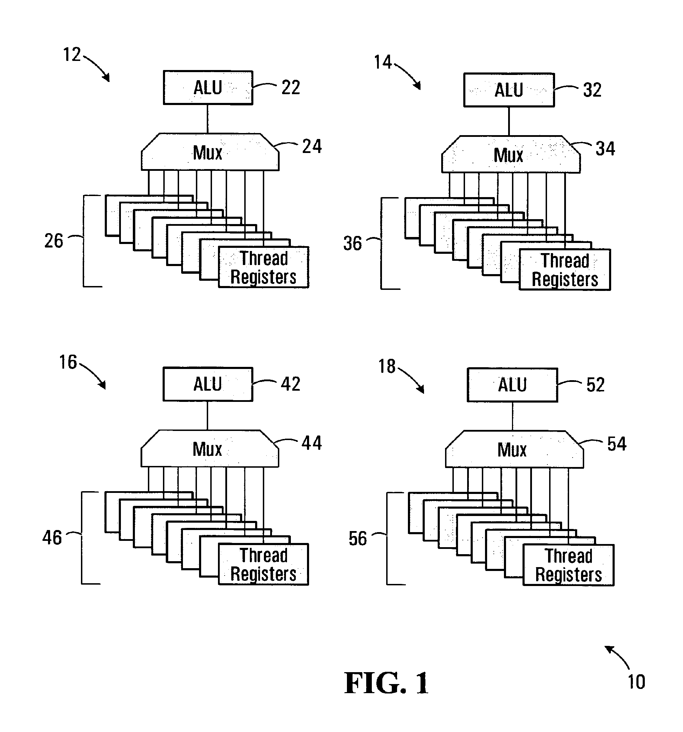

Fig. 1 is a block diagram of a processing system incorporating hardware threading for each of multiple processors. Multiple processors are often provided, for example, in space-limited processing environments such as communication network processor (NP) implementations which are also subject to relatively strict processing time requirements.

The processing system 10 includes processors 12, 14, 16, 18, each of which includes an ALU 22, 32, 42, 52, a multiplexer 24, 34, 44, 54, and eight sets of thread registers 26, 36, 46, 56.

Each multiplexer 24, 34, 44, 54 manages the storage of threads, or at least execution context information associated with threads, in the thread registers 26, 36, 46, 56 while they are not executing. An ALU executing a thread that becomes blocked swaps the current active thread with a standby thread. The standby thread now becomes the active thread and is executed. The swapped out thread can either wait in the registers 26, 36, 46, 56 to become the active executing thread after another swap.

Threads are scheduled for execution based on messages from an operating system or hardware signaling that indicates a blocked condition is now clear.

The thread registers 26, 36, 46, 56 may be provided using memory devices such as a Static Random Access Memory (SRAM) devices, allowing a relatively small area requirement for the number of threads supported. As an example, some current designs support up to 8 threads per ALU, whereas others support only 4 or even 2 threads. In a 4-processor system supporting 8 threads per processor, as shown in Fig. 1, this would result in storage of 32 threads.

In the system of Fig. 1, every thread is assigned the same amount of dedicated memory space, in the form of a number of registers, regardless of whether a thread will actually use that amount of space. Even though the space/register requirements of a thread may be known or determined, for example, when software code is compiled, every thread will still have the same amount of dedicated memory space. The amount of space dedicated to each thread is generally the same as the size of processor thread registers.

In addition, thread swapping is accomplished by capturing or transferring the contents of an entire set of registers, such that even the contents of registers which are not required for execution are transferred from the registers 26, 36, 46, 56 when a different thread is to become active.

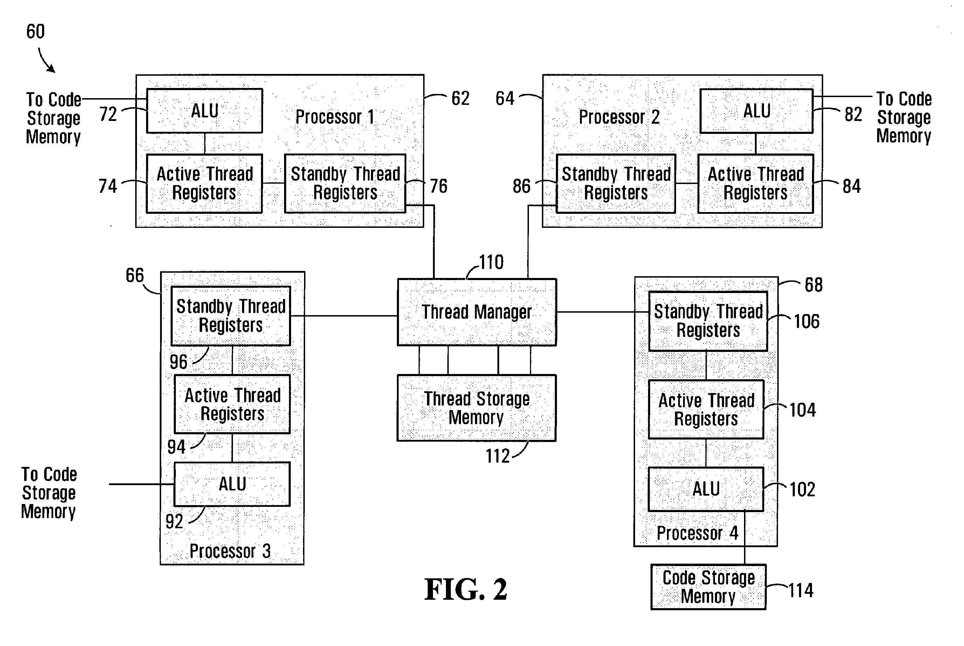

Fig. 2 is a block diagram of a processing system incorporating another type of threading. The processing system 60 includes four processors 62, 64, 66, 68, a thread manager 110 operatively coupled to the processors, a thread storage memory 112 operatively coupled to the thread manager 110, and a code storage memory 114 operatively coupled to the processors. Each of the processors 62, 64, 66, 68 includes an ALU 72, 82, 92, 102, a set of active thread registers 74, 84, 94, 104, and a set of standby thread registers 76, 86, 96, 106.

The processing system 60 is described in detail in co-pending United States Patent Application Serial No. 11/220,492, entitled "PROCESSING OPERATION MANAGEMENT SYSTEMS AND METHODS", filed on September 6, 2005, and assigned to the owner of the present application.

In one embodiment of the invention disclosed in the above-referenced co-pending application, a thread swap for a processor 62, 64, 66, 68 is performed by swapping all active thread registers 74, 84, 94, 104 to the standby registers 76, 86, 96, 106. The standby thread registers 76, 86, 96, 106 can then be swapped into the thread storage memory 112.

The operative connection between each standby thread register 76, 86, 96, 106 and the thread storage memory 112 might not be a "full width" bus or other type of connection of the same size as the connections between the thread registers 74/76, 84/86, 94/96, 104/106 and between the active thread registers 74, 84, 94, 104 and the ALUs 72, 82, 92, 102 because of routing constraints in a given technology, for example. In this case, a thread swap between the thread storage memory 112 and any one of the processors 62, 64, 66, 68 would occur in multiple steps. This could introduce additional blocking of an active thread and increase processor wait times while the swap function completes, such as when multiple thread swaps are required in a short period of time.

As noted above, conventional thread swapping, including software thread swapping between a processor and an external memory, is relatively slow because the contents of all active thread registers for a blocked formerly active thread are copied to memory and then contents of a complete set of thread registers for a new activated thread are copied from memory back into processor thread registers. This long delay is the motivation for hardware threading techniques. However, hardware-based thread swapping also involves transfer of information between entire sets of thread registers, since dedicated memory is assigned to each thread.

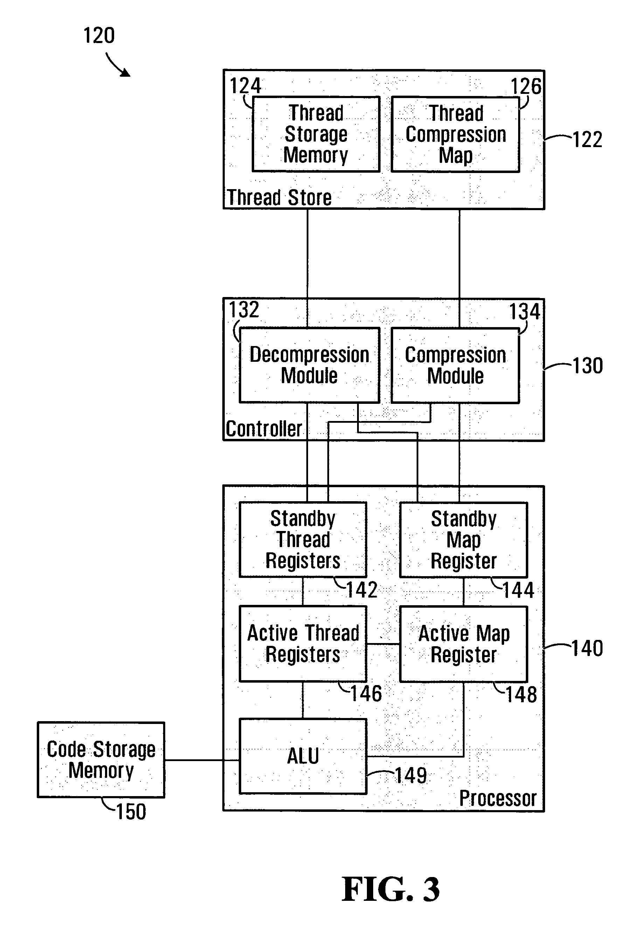

Fig. 3 is a block diagram of a processing system 120 incorporating an embodiment of the invention. It should be appreciated that the system 120 of Fig. 3, as well as the contents of subsequent drawings described below, are intended solely for illustrative purposes, and that the present invention is in no way limited to the particular example embodiments explicitly shown in the drawings and described herein.

For example, a multi-processor system may include one or more processors in addition to the processor shown in Fig. 3, where multiple processors share an external thread storage memory and/or a code storage memory. Embodiments of the invention may also be implemented in conjunction with one or more processors having a similar or different structure than shown. Software code executed by a processor may be stored separately, as shown, or possibly in thread registers with thread execution context information. Specific functions may also be distributed differently than shown in Fig. 3. Other variations are also contemplated.

The processing system 120 includes a thread store 122, a controller 130 operatively coupled to the thread store 122, a processor 140 operatively coupled to the controller 130, and a code storage memory 150 operatively coupled to the processor 140. The thread store 122 includes a thread storage memory 124 and a thread compression map 126, the controller 130 includes a decompression module 132 and a compression module 134, and the processor 140 includes standby thread registers 142, a standby map register 144, active thread registers 146, an active map register 148, and an ALU 149.

The types of interconnections between components shown in Fig. 3 may be dependent at least to some extent on the specific implementation of the system 120. In one embodiment, interconnections within the processor 140 and between controller 130 and the processor 140 are through a processor bus structure, whereas the interconnection between the controller 130 and the thread store 122 is via a less than full width bus.

In the external thread store 122, the thread storage memory 124 is a memory device in which thread context information associated with threads is stored. Any of various types of memory device may be used to implement the thread storage memory 124, including solid state memory devices and memory devices for use with movable or even removable storage media. In one embodiment, the thread storage memory 124 is provided in a high density memory device such as a Synchronous Static RAM (SSRAM) device or a Synchronous Dynamic (SDRAM) device. In multi-processor systems, a multi-port memory device may improve performance by allowing multiple threads in the thread store 124 to be accessed simultaneously.

The thread compression map 126 may be provided in the same memory device as the thread storage memory 124 or in a different memory device, and stores information which maps respective portions of thread context information stored in the thread storage memory 124 for a thread to particular registers, as discussed in further detail below.

Transfer of information between the thread store 122 and the processor 140 is controlled by the controller 130. The controller 130 need not necessarily interact directly with the thread store 122 as shown in Fig. 3. The controller 130 may instead control transfer of information to and from another component such as a thread manager, where a thread manager is involved in software thread swaps as in the processing system 60 of Fig. 2, for example.

The decompression module 132 and the compression module 134 may each be implemented in hardware, software for execution by a processing element such as the ALU 149, or some combination of hardware and software. The functions of these modules 132, 134 in transferring information to and from the processor 140 are described in detail below.

Each set of thread registers 142, 146 stores context information associated with a thread. Examples of registers which define the context of a thread include a stack pointer, a program counter, timers, flags, and data registers. In some embodiments, the actual software code which is executed by a processor when a thread is active may be stored in the thread registers. In the example shown in Fig. 3, however, software code is stored separately, in the code storage memory 150.

Although referred to herein primarily as registers, it should be appreciated that context information need not be stored in any particular type of memory device. As used herein, a register may more generally indicate a storage location at which information is stored, rather than the type of storage or memory device.

The standby and active map registers store information which maps respective portions of thread context information stored in the registers 142, 146 to those registers. In one embodiment, the map information is in the form of a mask indicating the registers to or from which information is to be transferred on a next thread swap. The map registers 144, 148 may be provided in the same memory devices as the thread registers 142, 146 or in different memory devices.

The ALU 149 is a representative example of a processing element which executes machine-readable instructions, illustratively software code. Threading, as noted above, effectively divides a software program or process into individual pieces which can be executed separately by the ALU 149. During execution of a thread, the ALU 149 accesses some or all of the active thread registers 146, to read information from registers and/or to write information to registers. The ALU 149 also interacts with the active map register 148 as described in detail below.

The code storage memory 150 stores software code, and may be implemented using any of various types of memory device, including solid state and/or other types of memory device. The ALU 149 may access a portion of software code in the code storage memory 150 identified by a program counter or other pointer or index stored in a program counter thread register in the active thread registers 146, for example. Actual thread software code is stored in the code memory 150 in the system 120, although in other embodiments the thread context information and software code may be stored in the same store, as noted above.

Threads are normally swapped between active and standby registers by capturing register contents and swapping them in and out as a unit. However, in order to reduce the time taken when threads are swapped, a tracking mechanism supported by the map registers 144, 148 is provided on the thread registers 142, 146 to indicate which registers are to be copied when a thread is to be swapped to the thread storage memory 124. The thread compression map 126 supports inverse operations for swapping a thread to the processor 140 from the thread storage memory 124. Although the thread registers 142, 146 may have a predetermined size corresponding to an assignment of a number of registers to be used to store context information for a thread, transfer of information with those assigned registers is controlled in such a manner that the amount of information to be transferred, and thus the swap time, between the thread store 122 and the controller 130 may be reduced.

The tracking mechanism may be implemented by making additional instructions in the ALU 149 available to program code, to enable the program code to provide indications as to whether each register in a set of thread registers is to be included or excluded from thread swap activity. These indications may affect either or both of the active and standby thread registers 146, 142, as described in further detail below, such that inter-register swaps and processor/thread store swaps may be controlled.

According to conventional thread management techniques, thread swaps between active and standby thread registers involve copying of all registers regardless of their fields or contents. Contents of the active thread registers 146 are automatically replaced by contents of the standby registers 142 when a thread is to be made active. Embodiments of the invention support use of a control setting to allow registers that are not swapped to be either overwritten or left unchanged. This mechanism allows register values for different threads to be mixed for particular types of operations such as sharing data between threads. A similar function may be supported by the decompression module 132 for software thread swapping from the thread storage memory 124 to the standby thread registers 142.

Thus, it should be apparent that either or both of the processor 140 and the controller 130 may support selective swapping control functions.

In operation, the controller 130 controls the transfer of information between the standby thread registers 142, illustratively hardware registers, and a memory array, the thread store 122. A standby thread for which context information is stored in the standby thread registers 142 is made active by swapping contents of selected ones of the standby thread registers 142 and the active thread registers 146. Software code for the thread may be stored along with thread context information and made available to the ALU 149 in a similar manner, although in some embodiments a program counter or analogous register is instead provided to redirect the ALU 149 to specific software code stored in the code storage memory 150 when the thread becomes active.

Thread swapping between standby and active registers within a processor may be controlled by the processor 140 itself, illustratively by the ALU 149. The ALU 149 may detect that its currently active thread is waiting for a return from a memory read operation for instance, and swap in its standby thread for execution during the wait time. In other embodiments, an external component detects thread blocking and initiates a thread swap by the processor 140. Swapping in from the thread store 122 may similarly be controlled by the processor 140 or by an external component such as a thread manager or an operating system.

Thread states and/or priorities are often used as criteria for deciding when threads should be swapped. For example, a software command or other mechanism may be available for determining thread states. Threads which are awaiting a processor to continue execution, when data is returned from a memory read operation for instance, may be in a "ready" or analogous state. A blocked or otherwise halted thread in the standby thread registers 142 may be swapped with a thread in the thread store 122 which is in a ready state. This ensures that ready threads do not wait in the shared thread store 122 when a standby thread is not ready for further execution.

Priority-based swapping is also possible, instead of or in addition to state-based swapping. A thread may be assigned a priority when or after it is created. A thread which is created by a parent thread, for example, may have the same priority as the parent thread. Priority may also or instead be explicitly assigned to a thread. By determining thread priorities, using a software command or function for instance, and swapping threads between the thread store 122 and the standby thread registers 142 based on the determined priorities, threads may be passed to the processor 140 in order of priority. Highest priority threads are then executed by the processor 140 before low priority threads. Priority could also or instead be used, by the ALU 149 for example, to control swapping of threads between the standby and active registers 142, 146, to allow a higher priority standby thread to pre-empt a lower priority active thread.

According to a combined state/priority approach, both states and priorities of threads are taken into account in managing threads. It may be desirable not to swap a ready thread out of the standby thread registers 142 in order to swap in a blocked thread of a higher priority, for instance. Swapping in of the higher priority thread may be delayed until that thread is in a ready state.

State and priority represent examples of criteria which may be used in determining whether threads are to be swapped into and/or out of the thread store 122 and between the thread registers 142, 146. Other thread swapping criteria may be used in addition to or instead of state and priority. Some alternative or additional thread scheduling mechanisms may be apparent to those skilled in the art.

In general, a thread may be considered an example of a software processing operation, including one or more tasks or instructions, which is executed by a processor, or in the case of the processor 140, a processing element (the ALU 149) of a processor. According to one embodiment of the invention, the controller 130 is configured to determine any storage locations, which would be one or more registers in Fig. 3, to or from which information associated with a processing operation is to be transferred, when the processing operation is to be executed or has been executed by the processor 140 for instance. The controller 130 may cause the information to be transferred from each of the determined location(s), if any, by either storing information to or copying or moving information from the location(s), or controlling another component which handles the information transfer.

In one embodiment, a mechanism is provided to identify the state of storage locations. For example, values stored in thread registers may be identified as valid or not valid for the purposes of a swap or other information transfer operation. Such register states may be inherent in map information, i.e., a register to be transferred is valid, or provided separately, instead of or in addition to map information.

Although multiple processor thread registers are available and would normally be used to store this information, embodiments of the invention allow information to be transferred with selected registers. The ALU 149 has access to all of the active thread registers 146, and indirectly to the standby thread registers 142 in that information can be swapped into the active thread registers 146 from the standby thread registers 142, but information might not be swapped between all thread registers.

When a processing operation is to be swapped into the processor 140, the controller 130 causes information associated with the processing operation to be transferred to the determined registers, which in the embodiment shown in Fig. 3 may include all of the standby thread registers 142 or only a subset thereof. As noted above, the controller 130 may itself copy or move the information to the registers, or control another component which handles the actual information transfer.

Consider the example of swapping a thread into the processor 140 for execution. For simplicity, it will be assumed that a thread and its compression map have previously been written to the thread store 122. Solely for the purposes of illustration, it will also be assumed that the standby and active thread registers 142, 146 each include 8 one-byte registers, and that the thread to be swapped in for execution by the processor 140 has 4 bytes of context information.

It should be apparent that the starting state for a processing system might be different than assumed above. When the processing system 120 is started, for example, its thread store 122 might be empty, with threads being added thereto by an operating system or the processor 140 as they are created. Those skilled in the art will also appreciate that the invention is in no way limited to any particular number of registers for a thread or the thread registers 142, 146.

For a swap in operation, the controller 130, and in particular the decompression module 132, receives information from the thread store 122. The decompression module 132 may access the thread store 122 directly, as shown, or indirectly, as would be the case for an embodiment of the invention implemented in conjunction with the processing system 60 of Fig. 2.

Information in the thread storage memory 124 is compressed in the sense that a thread which uses only 4 registers occupies only 4 bytes of memory, instead of the 8 bytes which would normally be reserved for every thread in this example. The correspondence between portions of information stored in the thread storage memory 124 and actual thread registers is specified by map information stored in the thread compression map 126.

This correspondence may be in the form of a mask value, for example. A binary mask value for this example of 8 one-byte thread registers would be one byte in length. In a binary mask value, bit values of 1 (or 0) might indicate the registers to which respective portions of information stored in the thread storage memory 124 correspond. For example, a mask value of 0 1 1 0 1 0 0 1 would indicate that the 4 bytes of stored context information belong to the second, third, fifth, and eighth thread registers, respectively.

An association between an entry in the thread compression map 126 and information in the thread storage memory 124 may be created in any of various ways. Thread and thread register requirements for software can generally be determined at compile time. Storage for thread context information could therefore be set up in the thread storage memory 124 before execution of the software. Entries in the thread compression map 126 may then be organized in the same order as information in the thread storage memory 124, so that a first block of information in the thread storage memory 124 is associated with a first entry in the compression map 126, and so on. The thread storage memory 124 and the thread compression map 126 could instead be combined, for example, such that map information is appended to or otherwise integrated with context information.

These associations might instead be more explicitly specified. According to one embodiment, a descriptor field is associated to a specific thread and indicates the number of registers that are stored for the thread and the context information to register mapping. Some sort of thread identifier is thereby included in each entry in the thread compression map 126 so that correct map information is obtained when thread context information is being swapped in from the thread storage memory 124. Thread context information may instead include a pointer to or other identifier of corresponding map information in the compression map 126.

Based on the map information from the thread compression map 126, the decompression module 132 distributes thread context information to the appropriate ones of the standby registers 142. In the above example, the 4 bytes of information from the thread storage memory are written into the second, third, fifth, and eighth standby thread registers. The contents of the other standby registers may be left intact, to allow information to be shared between threads, or erased, overwritten, set, reset, inverted, or otherwise modified. This function may be controlled in accordance with a control setting specified in the context information or the map information, for example, or a command from another component such as an operating system.

The map information may also be written into the standby map register 144 for use in determining which registers were loaded from the thread store 122, and/or which registers are to be read and transferred out to the thread storage memory 124 if the thread is to be swapped out from the processor 140.

Continuing with the example of a swap in operation, when a swapped in thread is to become active, the contents of the standby and active thread registers 142, 146 are exchanged. As described above, this may involve a bulk transfer of information between each of the standby thread registers 142 and the corresponding ones of the active thread registers 146.

The standby and active registers 142, 146 would normally be of the same size, so as to permit hardware thread swapping, which is generally faster than software thread swapping between a processor and an external memory. The contents of standby registers to which information was transferred by the decompression module 132 are thereby transferred to corresponding active thread registers. A program counter, for example, is transferred from a program counter register of the standby thread registers 142 to a program counter register of the active thread registers 146.

As for the transfer between the decompression module 132 and the standby thread registers 142, the standby/active thread register swap may involve modifying non-mapped registers or leaving non-mapped registers intact, to share information between threads for instance.

The contents of the standby and active map registers 144, 148 may also be swapped, so that map information "follows" the context information for which it specifies register correspondence. This allows the ALU 149 to determine which of the active thread registers 146 store information loaded from the standby thread registers 142.

Transfer of map information from the standby map register 144 to the active map register 148 also allows the ALU 149 to maintain a record of the specific active thread registers it accessed during execution of the active thread, which may be particularly useful when execution of a thread is interrupted, such as when a thread is pre-empted by a higher priority thread. This function may instead be enabled by an operative connection between the active thread registers 146 and the active map register 148, whereby any active thread registers accessed during execution of a thread are automatically flagged in the active map register 148.

Map information in the active map register 148 might also be updated by the ALU 149 when certain context information is no longer relevant to subsequent execution of the thread, or when a new output value to be stored in a new register is calculated, for example. In the former case, the number of registers swapped in may be greater than the number subsequently swapped out, and in the latter case, a greater number of registers may be swapped out. The ALU 149 may thus provide an indication of particular active registers 146 from which information is to be transferred upon completion of its execution of the processing operation, and may also or instead transfer the information from the active registers 146. More generally, the ALU 149 may cause information to be transferred out of specific standby registers by indicating from which registers information is to be transferred, or actually transferring information out of those registers.

As noted above, interactions between the ALU 149 and the active map register 148 may be supported by providing register-related ALU functions and making those functions available to software code being executed by the ALU 149. These functions may include, for example, functions to clear, set, invert, or direct the active map register 148, a function to swap the contents of only the active map register 148 out to the standby map register 144, a function to swap the contents of only the standby map register 144 into the active map register 148, and/or other functions.

Current execution of a thread by the ALU 149 may complete when the thread blocks or when all instructions in the thread have been executed. The contents of the active and standby thread registers 146, 142, or at least the registers specified in the active map register 148, are again swapped. Non-mapped registers may be modified or left intact. The contents of the standby and active map registers 148, 144 may also be swapped.

In some embodiments, thread context information is maintained for a thread only until execution of all instructions for that thread has been completed. The active to standby swapping, and the subsequent swapping operations described below, might therefore not necessarily be performed for fully completed threads.

Information stored in the standby thread registers 142 may be compressed by the compression module 134 and swapped out to the thread storage memory 124. The compression module 134 moves or copies information from the standby registers that are specified in the standby map register 144 as part of the thread to the thread storage memory 124. In the above example, information from 4 of the 8 standby thread registers 142 are read, and the 4 bytes of information are placed in the thread storage memory 124. This results in a compression of the information in that no memory used for inactive registers. Map information from the standby map register is similarly moved or copied to the thread compression map 126 so that the context information to register correspondence for a subsequent swap operation can be determined.

As described above, threads are swapped into and out of the processor 140, and the ALU 149 can identify whether registers should be included in the swap or dropped. In terms of memory savings, the above example thread uses only 4 of 8 one-byte registers, although one additional byte is used to store the compression map. The total memory savings in this case would be 8 register bytes total, less 4 register bytes used, less 1 map byte, for a savings of 3 registers. This represents a 36% reduction in memory for the thread and similarly a reduction of 36% in the amount of information to be transferred with registers for thread swapping. In a real implementation, the total thread size could easily be in excess of 1Kbit for a 32 bit processor. Significant savings and performance gains could be realized.

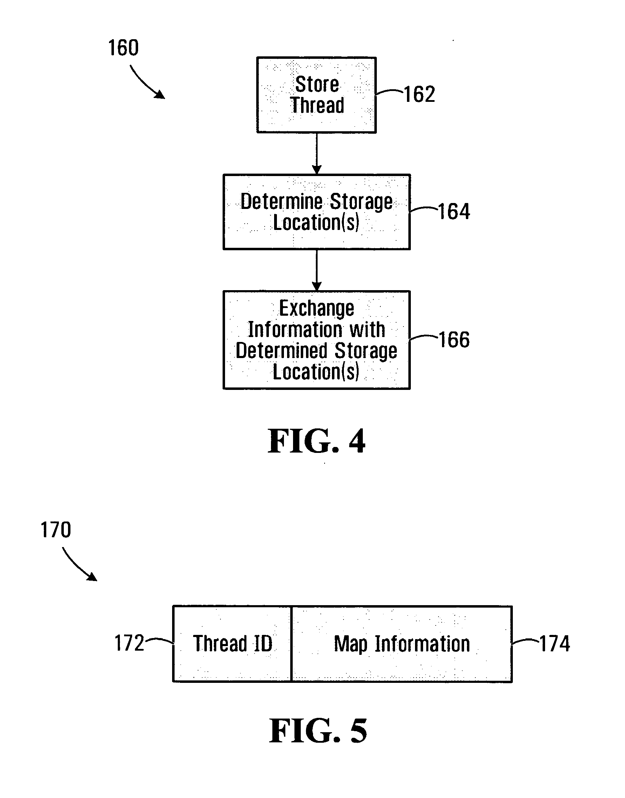

Embodiments of the invention have been described above primarily in the context of a system. Fig. 4 is a flow diagram of a method 160 according to another embodiment of the invention.

In the method 160, a thread is stored to a memory at 162. This may involve storing context information for a new thread in memory, swapping a newly created thread or a standby thread from a processor to an external memory, or swapping a blocked thread from active thread registers to standby thread registers, for example.

At 164, it is determined to or from which storage location(s), if any, of a plurality of storage locations for storing information associated with the thread, such as the standby registers 142 in Fig. 3, information is to be transferred in order to swap the thread to or from a processor. When the thread is to be swapped, the method 160 proceeds at 166 with an operation of exchanging information with the determined storage location(s). This may involve moving or copying information to the determined storage location(s) for swapping a processing operation into a processor or moving or copying information from the determined storage location(s) for swapping a processing operation out of a processor.

The operations at 162, 164, 166 may be repeated for the same thread, to swap the thread into and out of a processor for instance, or for multiple threads. In a multi-processor system, these operations may be performed, possibly simultaneously, for multiple threads.

Methods according to other embodiments of the invention may include further, fewer, or different operations than those explicitly shown in Fig. 4, and/or operations which are performed in a different order than shown. The method 160 is illustrative of one possible embodiment.

The invention may also be embodied in a data structure stored in a memory, such as the compression map 126 and/or either or both of the map registers 144, 148 of Fig. 3. An example data structure 170 according to an illustrative embodiment of the invention is shown in Fig. 5.

The data structure 170 includes data fields 172, 174, which respectively store a thread identifier and map information. The thread identifier in the data field 172 links the map information to a particular thread, and the map information in the data field 174 provides an indication of one or more storage locations, illustratively registers, to or from which information is to be transferred for use by a processor in executing the thread.

With reference to Figs. 3 and 5, the compression map 126 may include multiple data entries having the structure 170 for respective threads.

It should be appreciated that the thread identifier data field 172 might not be provided in all embodiments, depending on how map information is associated with corresponding thread context information. A thread identifier might not be used, for example, if map information is appended to thread information in a thread store. Also, thread registers generally store information for only one thread at a time, and accordingly, in the processing system 120 of Fig. 3 for instance, the map registers 144, 148 might store only map information corresponding to the threads for which context information is stored in the registers 142, 146.

Embodiments of the invention as disclosed herein may speed up thread swap or similar operations by reducing the amount of information which is to be transferred during such operations. Also, better memory usage for thread storage allows more threads to be supported in the same memory area, possibly improving system performance.

Thread data stored in active and standby thread registers and a thread store are efficiently managed to increase processing speed. Specific standby registers are selected for swapping with contents in a thread store. The data stored in the thread store are compressed, in that contents of inactive registers do not occupy any thread store memory space, thereby achieving more efficient memory utilization.

Furthermore, the means employed to achieve these efficiency gains may also be used to enable sharing of thread data between threads. By swapping contents of only selected registers, swap time is reduced and data is shared between threads since contents of non-swapped registers are left intact.

Compressed threads do not necessarily preclude other thread functions. For example, pre-emptive threading may still be supported without degradation of performance over the non-compressed scenario. In the event of a forced thread swap, wherein a current active thread is pre-empted by a high priority thread that cannot wait for a graceful halt to the active thread, registers that have been accessed since the current thread was made active, plus any other registers that were identified as being active, will be swapped. Although this may copy scratch pad or junk data, any registers that have not been touched and were not swapped in will remain uncopied, still realizing performance gains.

The techniques disclosed herein also need not necessarily be applied to all threads or registers. Registers fundamental to a thread, such as a stack pointer, program counter, timers, etc., may always be copied. In this case, mapping information may specify either correspondence between only non-fundamental registers and context information, or a complete mapping with fundamental registers always being specified to be included in a swap.

Compressed threading may be useful in realizing gains in efficiency of processor execution, physical implementation, resource allocation, and program response. These factors can be combined in a target product to make it run faster, cost less, use less power, and be physically smaller.

What has been described is merely illustrative of the application of principles of embodiments of the invention. Other arrangements and methods can be implemented by those skilled in the art without departing from the scope of the present invention.

For example, although Fig. 3 shows one set of standby thread registers, other embodiments may be configured for operation with processors having multiple sets of standby thread registers or no standby thread registers. The standby and active registers represent a speed optimization, and accordingly need not be provided in all implementations.

The particular division of functions represented in Fig. 3 is similarly intended for illustrative purposes. The functionality of the controller 130, for instance, may be implemented in the processor 140.

It should also be appreciated that threads may be swapped into and out of an external shared memory for reasons other than input/output blocking. A thread may incorporate a sleep time or stop condition, for example, and be swapped out of a processor when in a sleep or stop state.

In addition, although described primarily in the context of methods and systems, other implementations of the invention are also contemplated, as instructions stored on a machine-readable medium, for example.

## Claims

1. A controller (130) configured to determine, from among a plurality of first storage locations (142) for storing respective blocks of information associated with a processing operation that is scheduled for execution by a processor (140), said information corresponding to context information and, optionally, to code information executed when said processing operation is executed, and a plurality of second storage locations (124) fewer in number than the first storage locations (142) for storing corresponding information associated with an unscheduled processing operation, corresponding first and second storage locations between which information is to be swapped, and to cause said information associated with said scheduled and said unscheduled processing operations to be swapped between the determined corresponding first and second storage locations.

2. The controller (130) of claim 1, wherein the controller (130) is configured to determine the corresponding first and second storage locations by receiving compression map information (126, 144) specifying a correspondence between the first and second storage locations.

3. The controller (130) of claim 1 or claim 2, wherein, when the unscheduled processing operation is to be scheduled for execution by the processor (140), the controller (130) causes the information associated with the unscheduled processing operation to be transferred from the plurality of second storage locations (124) to the corresponding first storage locations (142).

4. The controller (130) of claim 1 or claim 2, wherein, after the scheduled processing operation has been executed by the processor (140), the controller (130) causes the information associated with the scheduled processing operation to be transferred to the plurality of second storage locations (124) from the corresponding first storage locations (142).

5. The controller (130) of claim 4, wherein the processor (140) is configured to provide an indication of each first storage location of the plurality of first storage locations (142) which is accessed during execution of the scheduled processing operation, and wherein the controller (130) is further configured to receive the indication provided by the processor (140), and to cause the information associated with the scheduled processing operation to be transferred only from each first storage location which is accessed during execution of the scheduled processing operation to its corresponding second storage location.

6. The controller (130) of claim 3, wherein the controller (130) is further configured to cause contents of a first storage location of the plurality of first storage locations (142) that has no corresponding second storage location to be modified.

7. The controller (130) of claim 3, wherein, before the information associated with the unscheduled processing operation is transferred, the plurality of first storage locations (142) store information associated with another processing operation, wherein the controller (130) is further configured to allow contents of a first storage location of the plurality of first storage locations (142) that has no corresponding second storage location to remain intact, whereby the contents are shared between processing operations.

8. The controller (130) of claim 1, wherein the plurality of first storage locations (142) comprises standby thread registers (142), and wherein the plurality of second storage locations (124) comprises a thread store (122).

9. The controller (130) of any one of claims 1 to 8, wherein the controller (130) comprises a decompression module (132) operable to transfer information from the second storage locations to the corresponding first storage locations, and a compression module (134) operable to transfer information to the second storage locations from the corresponding first locations.

10. A device (120) comprising:
the controller (130) of any one of claims 1 to 9;
a first memory (142) operatively coupled to the controller (130) and comprising the plurality of first storage locations (142); and
a second memory (122) operatively coupled to the controller (130) and comprising the plurality of second storage locations (124).

11. The device (120) of claim 10, further comprising:
the processor (140) operatively coupled to the controller (130) and to the first memory (142).

12. The device (120) of claim 11, wherein the controller (130) is implemented using the processor (140).

13. A method comprising:
determining (164), from among a plurality of first storage locations for storing respective blocks of information associated with a processing operation that is scheduled for execution by a processor said information corresponding to context information and, optionally, to code information executed when said processing operation is executed and a plurality of second storage locations fewer in number than the first storage locations for storing corresponding information associated with an unscheduled processing operation, corresponding first and second storage locations between which information is to be swapped; and
swapping (166) said information associated with said scheduled and said unscheduled processing operations between the determined corresponding first and second storage locations.

14. The method of claim 13, wherein determining (164) comprises receiving compression map information specifying a correspondence between the first and second storage locations.

15. The method of claim 13 or claim 14, wherein, when the unscheduled processing operation is to be scheduled for execution by the processor, transferring (166) comprises transferring the information associated with the unscheduled processing operation from the plurality of second storage locations to the corresponding first storage locations.

16. The method of claim 13 or claim 14, wherein, after the scheduled processing operation has been executed by the processor, transferring (166) comprises transferring the information associated with the scheduled processing operation to the plurality of second storage locations from the corresponding first storage locations.

17. The method of claim 16, further comprising:
providing an indication of each first storage location of the plurality of storage locations which is accessed during execution of the scheduled processing operation,
wherein transferring (166) comprises transferring the information associated with the scheduled processing operation only from each first storage location which is accessed during execution of the scheduled processing operation to its corresponding second storage location.

18. The method of claim 15, wherein transferring (166) further comprises at least one of:
allowing contents of a first storage location of the plurality of first storage locations that has no corresponding second storage location to remain intact, to thereby share the contents with the unscheduled processing operation; and
modifying contents of a first storage location of the plurality of first storage locations that has no corresponding second storage location.

19. The method of any one of claims 13 to 18, wherein the plurality of first storage locations comprises standby thread registers, and wherein the plurality of second storage locations comprises a thread store.

20. A machine-readable medium storing instructions which when executed perform the method of any one of claims 13 to 19.

## Patentansprüche

1. Ein Controller (130), weicher konfiguriert ist, um unter einer Vielzahl von ersten Speicherstellen (142) zum Speichern von jeweiligen Informationsblöcken, welche mit einem für die Ausführung durch einen Prozessor (140) geplanten Verarbeitungsvorgang assoziiert sind, wobei die besagten Informationen Kontextinformationen und, optional, Code-Informationen entsprechen, welche ausgeführt werden, wenn der besagte Verarbeitungsvorgang ausgeführt wird, und einer Vielzahl von zweiten Speicherstellen (124), deren Anzahl kleiner ist als die der ersten Speicherstellen (142), zum Speichern von entsprechenden Informationen, welche mit einem nicht geplanten Verarbeitungsvorganng assoziiert sind, die entsprechenden ersten und zweiten Speicherstellen, zwischen weichen die Informationen ausgetauscht werden sollen, zu bestimmten, und um veranlassen, die besagten mit dem besagten geplanten und dem besagten nicht geplanten Verarbeitungsvorgang assoziierten Informationen zwischen den bestimmten entsprechenden ersten und zweiten Speicherstellen ausgetauscht werden.

2. Der Controller (130) nach Anspruch 1, wobei der Controller konfiguriert ist, um die entsprechenden ersten und zweiten Speicherstellen durch Empfangen von Compression-Map-Informationen (126, 144), welche eine Übereinstimmung zwischen den ersten und zweiten Speicherstellen spezifizieren, zu bestimmen.

3. Der Controller (130) nach Anspruch 1 oder 2, wobei, wenn der nicht geplante Verarbeitungsvorgang für das Ausführen durch den Prozessor (140) geplant werden soll, der Controller (130) veranlasst, dass die mit dem nicht geplanten Verarbeitungsvorgang assoziierten Informationen von der Vielzahl von zweiten Speicherstellen (124) an die entsprechenden ersten Speicherstellen (142) übertragen werden.

4. Der Controller (130) nach Anspruch 1 oder 2, wobei, nachdem der Prozessor (140) den geplanten Verarbeitungsvorgang ausgeführt hat, der Controller (130) veranlasst, dass die mit dem geplanten Verarbeitungsvorgang assoziierten Informationen von den entsprechenden ersten Speicherstellen (142) an die Vielzahl von zweiten Speicherstellen (124) übertragen werden.

5. Der Controller (130) nach Anspruch 4, wobei der Prozessor (140) konfiguriert ist, um eine Angabe über eine jede erste Speicherstelle der Vielzahl von ersten Speicherstellen (142), auf welche während der Ausführung des geplanten Verarbeitungsvorgangs zugegriffen wird, bereitzustellen, und wobei der Controller (130) weiterhin konfiguriert ist, um die von dem Prozessor (140) bereitgestellte Angabe zu empfangen und zu veranlassen, dass die mit dem geplanten Verarbeitungsvorgang assoziierten Informationen nur von jeder ersten Speicherstelle, auf welche während der Ausführung des geplanten Verarbeitungsvorgangs zugegriffen wird, an ihre entsprechende zweite Speicherstelle übertragen werden.

6. Der Controller (130) nach Anspruch 3, wobei der Controller (130) weiterhin konfiguriert ist, um zu veranlassen, dass die Inhalte einer ersten Speicherstelle der Vielzahl von ersten Speicherstellen (142), welche keine entsprechende zweite Speicherstelle hat, modifiziert werden.

7. Der Controller (130) nach Anspruch 3, wobei, bevor die mit dem nicht geplanten Verarbeitungsvorgang verbundenen Informationen übertragen werden, die Vielzahl von ersten Speicherstellen (142) Informationen, welche mit einem anderen Verarbeitungsvorgang assoziiert sind, speichern, wobei der Controller (130) weiterhin konfiguriert ist, um zu ermöglichen, dass die Inhalte einer ersten Speicherstelle der Vielzahl von ersten Speicherstellen (142), welche keine entsprechende zweite Speicherstelle hat, intakt bleiben, wobei die Inhalte unter den Verarbeitungsvorgängen gemeinsam verwendet werden.

8. Der Controller (130) nach Anspruch 1, wobei die Vielzahl von ersten Speicherstellen (142) Standby-Thread-Register (142) umfasst, und wobei die Vielzahl von zweiten Speicherstellen (124) einen Thread-Speicher (122) umfasst.

9. Der Controller (130) nach einem beliebigen der Ansprüche 1 bis 8, wobei der Controller (130) ein Dekomprimierungsmodul (132), welches fähig ist, die Informationen von den zweiten Speicherstellen an die entsprechenden ersten Speicherstellen zu übertragen, sowie ein Komprimierungsmodul (134), welches fähig ist, Informationen von den entsprechenden ersten Speicherstellen an die zweiten Speicherstellen zu übertragen, umfasst.

10. Eine Vorrichtung (120), umfassend:
Den Controller (130) nach einem beliebigen der Ansprüche 1 bis 9;
einen ersten Speicher (142), welcher operativ an den Controller (130) gekoppelt ist, und eine Vielzahl von ersten Speicherstellen (142) enthält; und
einen zweiten Speicher (122), welcher operativ an den Controller (130) gekoppelt ist und eine Vielzahl von zweiten Speicherstellen (124) enthält.

11. Die Vorrichtung (120) nach Anspruch 10, weiterhin umfassend:
Den Prozessor (140), welcher operativ an den Controller (130) und an den ersten Speicher (142) gekoppelt ist.

12. Die Vorrichtung (120) nach Anspruch 11, wobei der Controller (130) unter Verwendung des Prozessors (140) implementiert wird.

13. Ein Verfahren, umfassend:
Bestimmen (164), unter einer Vielzahl von ersten Speicherstellen zum Speichern von jeweiligen Informationsblöcken, welche mit einem für die Ausführung durch einen Prozessor geplanten Verarbeitungsvorgang assoziiert sind, wobei die besagten Informationen Kontextinformation und, optional, Code-Informationen entsprochen, welche ausgeführt werden, wenn der besagte Verarbeitungsvorgang ausgeführt wird, und einer Vielzahl von zweiten Speicherstellen, deren Anzahl kleiner ist als die der ersten Speicherstellen, zum Speichern von entsprechenden Informationen, welche mit einem nicht geplanten Verarbeitungsvorganng assoziiert sind, der entsprechenden ersten und zweiten Speicherstellen, zwischen welchen die Informationen ausgetauscht werden sollen; und
Austauschen (166) der besagten mit dem besagten geplanten und dem besagten nicht geplanten Verarbeitungsvorgang assoziierten Informationen zwischen den bestimmten entsprechenden ersten und zweiten Speicherstellen.

14. Das Verfahren nach Anspruch 13, wobei das Bestimmen (164) das Empfangen von Compression-Map-Informationen, welche eine Übereinstimmung zwischen den ersten und zweiten Speicherstellen spezifizieren, umfasst.

15. Das Verfahren nach Anspruch 13 oder 14, wobei, wenn der besagte nicht geplante Verarbeitungsvorgang für die Ausführung durch den Prozessor geplant werden soll, das Übertragen (166) das Übertragen von mit dem nicht geplanten Verarbeitungsvorgang assoziierten Informationen von der Vielzahl von zweiten Speicherstellen an die entsprechenden ersten Speicherstellen umfasst.

16. Das Verfahren nach Anspruch 13 oder 14, wobei, nachdem der Prozessor den geplanten Verarbeitungsvorgang ausgeführt hat, das Übertragen (166) das Übertragen von mit dem geplanten Verarbeitungsvorgang assoziierten Informationen von den entsprechenden ersten Speicherstellen an die Vielzahl von zweiten Speicherstellen umfasst.

17. Das Verfahren nach Anspruch 16, weiterhin umfassend:
Bereitstellen einer Angabe über eine jede erste Speicherstelle der Vielzahl von ersten Speicherstellen, auf welche während der Ausführung des geplanten Verarbeitungsvorgangs zugegriffen wird,
wobei das Übertragen (166) das Übertragen der mit dem geplanten Verarbeitungsvorgang assoziierten Informationen nur von jeder ersten Speicherstelle, auf welche während der Ausführung des geplanten Verarbeitungsvorgangs zugegriffen wird, an ihre entsprechende zweite Speicherstelle umfasst.

18. Das Verfahren nach Anspruch 15, wobei das Übertragen (166) weiterhin mindestens einen der folgenden Schritte umfasst:
Ermöglichen, dass die Inhalte einer ersten Speicherstelle der Vielzahl von ersten Speicherstellen, welche keine entsprechende zweite Speicherstelle hat, intakt bleiben, um dadurch mit dem nicht geplanten Verarbeitungsvorgang gemeinsam zu verwenden; und
Modifizieren der Inhalte einer ersten Speicherstelle der Vielzahl von ersten Speicherstellen, welche keine entsprechende zweite Speicherstelle hat.

19. Das Verfahren nach einem beliebigen der Ansprüche 13 bis 18, wobei die Vielzahl von ersten Speicherstellen Stand by-Thread-Register umfasst, und wobei die Vielzahl von zweiten Speicherstellen einen Thread-Speicher umfasst.

20. Ein maschinenlesbares Medium, welches Befehle speichert, die bei deren Ausführung das Verfahren nach einem beliebigen der Ansprüche 13 bis 19 durchführen.

## Revendications

1. Contrôleur (130) configuré pour déterminer, parmi une pluralité de premiers emplacements de stockage (142) pour stocker des blocs respectifs d'information associés à une opération de traitement qui est programmée pour être exécutée par un processeur (140), ladite information correspondant à une information contextuelle et, en option, à une information de code exécutée lorsque ladite opération de traitement est exécutée, et une pluralité de deuxièmes emplacements de stockage (124) moins nombreux que les premiers emplacements de stockage (142) pour stocker une information correspondante associée à une opération de traitement non programmée, les premiers et deuxièmes emplacements de stockage correspondants entre lesquels l'information doit être échangée, et pour provoquer l'échange dé ladite information associée auxdites opérations de traitement programmées et non programmées entre les premier et deuxième emplacements de stockage correspondants déterminés.

2. Contrôleur (130) selon la revendication 1, le contrôleur (130) étant configuré pour déterminer les premiers et deuxièmes emplacements de stockage correspondants en recevant des informations de correspondance compressées (126, 144) qui spécifient une correspondante entre les premier et deuxième emplacements de stockage.

3. Contrôleur (130) selon la revendication 1 ou la revendication 2, dans lequel, lorsque l'opération de traitement non programmée doit être programmée en vue de son exécution par le processeur (140), le contrôleur (130) provoque le transfert de l'information associée à l'opération de traitement non programmée depuis la pluralité de deuxièmes emplacements de stockage (124) vers les premiers emplacements de stockage correspondants (142).

4. Contrôleur (130) selon la revendication 1 ou la revendication 2, dans lequel, après l'exécution de l'opération de traitement programmée par le processeur (140), le contrôleur (130) provoque le transfert de l'information associée à l'opération de traitement programmée vers la pluralité de deuxièmes emplacements de stockage (124) depuis les premiers emplacements de stockage correspondants (142).

5. Contrôleur (130) selon la revendication 4, le processeur (140) étant configuré pour fournir une indication de chaque premier emplacement de stockage parmi la pluralité de premiers emplacements de stockage (142) auquel il accède pendant l'exécution de l'opération de traitement programmée, et le contrôleur (130) étant en outre configuré pour recevoir l'indication fournie par le processeur (140) et pour provoquer le transfert de l'information associée à l'opération de traitement programmée uniquement depuis chaque premier emplacement de stockage auquel a lieu un accès pendant l'exécution de l'opération de traitement programmée vers son deuxième emplacement de stockage correspondant.

6. Contrôleur (130) selon la revendication 3, le contrôleur (130) étant en outre configuré pour provoquer la modification du contenu d'un premier emplacement de stockage parmi la pluralité de premiers emplacements de stockage (142) qui ne possède pas un deuxième emplacement de stockage correspondant.

7. Contrôleur (130) selon la revendication 3, dans lequel, avant que le transfert de l'information associée à l'opération de traitement non programmée, la pluralité de premiers emplacements de stockage (142) stocke l'information associée à une autre opération de traitement, le contrôleur (130) étant en outre configuré pour permettre au contenu d'un premier emplacement de stockage parmi la pluralité d'emplacements de stockage (142) qui ne possède pas un deuxième emplacement de stockage correspondant de rester intact, les contenus étant partagés entre les opérations de traitement.

8. Contrôleur (130) selon la revendication 1, la pluralité de premiers emplacements de stockage (142) comprenant des registres de processus en attente (142), et la pluralité de deuxièmes emplacements de stockage (124) comprenant un magasin de processus (122).

9. Contrôleur (130) selon l'une quelconque des revendications 1 à 8, le contrôleur (130) comprenant un module de décompression (132) qui peut être utilisé pour transférer des informations depuis les deuxièmes emplacements de stockage vers les premiers emplacements de stockage correspondants et un module de compression (134) qui peut être utilisé pour transférer des informations vers les deuxièmes emplacements de stockage depuis les premiers emplacements de stockage correspondants.

10. Dispositif (120) comprenant :
le contrôleur (130) selon l'une quelconque des revendications de 1 à 9 ;
une première mémoire (142) connectée de manière opérationnelle au contrôleur (130) et comprenant la pluralité de premiers emplacements de stockage (142) ; et une deuxième mémoire (122) connectée de manière opérationnelle au contrôleur (130) et comprenant la pluralité de deuxièmes emplacements de stockage (124).

11. Dispositif (120) selon la revendication 10, comprenant en outre :
le processeur (140) connecté de manière opérationnelle au contrôleur (130) et à la première mémoire (142).

12. Dispositif (120) selon la revendication 11, le contrôleur (130) étant mis en oeuvre en utilisant le processeur (140).

13. Procédé comprenant :
détermination, parmi une pluralité de premiers emplacements de stockage pour stocker des blocs respectifs d'information associés à une opération de traitement qui est programmée pour être exécutée par un processeur, ladite information correspondant à une information contextuelle et, en option, à une information de code exécutée lorsque ladite opération de traitement est exécutée, et une pluralité de deuxièmes emplacements de stockage moins nombreux que les premiers emplacements de stockage pour stocker une information correspondante associée à une opération de traitement non programmée, des premiers et deuxièmes emplacements de stockage correspondants entre lesquels l'information doit être échangée; et échange (166) de ladite information associée auxdites opérations de traitement programmées et non programmées entre les premiers et deuxièmes emplacements de stockage correspondants déterminés.

14. Procédé selon la revendication 13, la détermination (164) comprenant la réception d'une information de correspondance de compression spécifiant une correspondance entre les premiers et deuxièmes emplacements de stockage.

15. Procédé selon la revendication 13 ou la revendication 14, dans lequel, lorsque l'opération de traitement non programmée doit être programmée en vue de son exécution par le processeur, le transfert (166) comprend le transfert de l'information associée à l'opération de traitement non programmée depuis la pluralité de deuxièmes emplacements de stockage vers les premiers emplacements de stockage correspondants.

16. Procédé selon la revendication 13 ou la revendication 14, dans lequel, après l'exécution de l'opération de traitement programmée par le processeur, le transfert (166) comprend le transfert de l'information associée à l'opération de traitement programmée vers la pluralité de deuxièmes emplacements de stockage depuis les premiers emplacements de stockage correspondants.

17. Procédé selon la revendication 16, comprenant en outre :
fourniture d'une indication de chaque premier emplacement de stockage parmi la pluralité d'emplacements de stockage auquel a lieu un accès pendant l'exécution de l'opération de traitement programmée,
le transfert (166) comprenant le transfert de l'information associée à l'opération de traitement programmée uniquement depuis chaque premier emplacement de stockage auquel un accès a lieu pendant l'exécution de l'opération de traitement programmée vers son deuxième emplacement de stockage correspondant.

18. Procédé selon la revendication 15, le transfert (166) comprenant en outre au moins l'une des opérations suivantes :
autoriser le contenu d'un premier emplacement de stockage parmi la pluralité de premiers emplacements de stockage qui ne possède pas de deuxième emplacement de stockage correspondant à rester intact afin de partager ainsi le contenu avec l'opération de traitement non programmée ; et
modifier le contenu d'un premier emplacement de stockage parmi la pluralité de premiers emplacements de stockage qui ne possède pas de deuxième emplacement de stockage correspondant.

19. Procédé selon l'une quelconque des revendication 13 à 18, la pluralité de premiers emplacements de stockage comprenant des registres de processus en attente, et la pluralité de deuxièmes emplacements de stockage comprenant un magasin de processus.

20. Support pouvant être lu par une machine et stockant des instructions qui, lorsqu'elles sont exécutées, réalisent le procédé de l'une quelconque des revendications de 13 à 19.
